(19) **Europäisches Patentamt**

**European Patent Office**

**Office européen des brevets**

(11) Veröffentlichungsnummer: **0 266 658 B1**

# (12) EUROPÄISCHE PATENTSCHRIFT

(45) Veröffentlichungstag der Patentschrift: **29.04.92**

(51) Int. Cl.⁵: **B62D 5/30**

(21) Anmeldenummer: **87115737.6**

(22) Anmeldetag: **27.10.87**

---

(54) **Hilfskraftlenkung für Kraftfahrzeuge.**

---

(30) Priorität: **05.11.86 PCT/LU86/00636**

(43) Veröffentlichungstag der Anmeldung:
**11.05.88 Patentblatt 88/19**

(45) Bekanntmachung des Hinweises auf die
Patenterteilung:
**29.04.92 Patentblatt 92/18**

(84) Benannte Vertragsstaaten:
**DE FR GB IT SE**

(56) Entgegenhaltungen:
**EP-A- 0 044 065**
**DE-A- 3 109 851**
**GB-A- 2 001 287**
**GB-A- 2 063 791**

(73) Patentinhaber: **ZF FRIEDRICHSHAFEN Aktiengesellschaft
Löwentaler Strasse 100 Postfach 2520
W-7990 Friedrichshafen 1(DE)**

(72) Erfinder: **Elser, Dieter
Jägerstrasse 10
W-7087 Essingen(DE)**

---

## Beschreibung

Die Erfindung betrifft eine Hilfskraftlenkung für Kraftfahrzeuge nach der im Oberbegriff von Anspruch 1 näher definierten Art. Eine derartige Hilfskraftlenkung ist zum Beispiel aus der DE-A-3 109 851 bekannt.

Bei Zweikreislenkanlagen mit einer radgetriebenen und mit einer motorgetriebenen Pumpe muß die hydraulische Unterstützung des Kreises mit der motorgetriebenen Pumpe so stark dimensioniert sein, daß Rangiervorgänge durchgeführt werden können. Dies bedeutet, daß der zweite Kreis mit der radgetriebenen Pumpe ein zusätzliches hydraulisches Potential dar stellt. Der zweite Kreis mit der radgetriebenen Pumpe ist jedoch aus Sicherheitsgründen erforderlich. Nachteilig ist jedoch, daß im Vergleich zu einer Einkreislenkung dadurch ein höheres Gesamtpotential der Hydraulik vorliegt, das unter Umständen doppelt so hoch sein kann. Dies kann beim Fahren eine Festigkeitsgefährdung der mechanischen Übertragungsteile wie z.B. der Kugelgelenke bedeuten, denn aufgrund des hohen Gesamtpotentials bzw. der hohen Servoverstärkung kann das Fahrzeug nahezu unbemerkt vom Fahrer auch in sehr unebenem Gelände noch sicher gelenkt werden. Insbesondere bei hö heren Geschwindigkeiten ist dies der Fall, wenn der zweite Kreis voll mitläuft. Es ist zwar bereits bekannt, für die Zuschaltung des zweiten Kreises eine geringfügig höhere Kraft am Lenkrad vorzusehen, aber diese wird häufig nicht erkannt. Dies bedeutet, der Fahrer fährt auch in schwierigem Gelände weiter voll durch, was zu schweren Schädigungen am Fahrzeug führen kann.

Der vorliegenden Erfindung liegt daher die Aufgabe zugrunde, eine Hilfskraftlenkung der eingangs erwähnten Art zu schaffen, bei dem unter Beibehaltung des zweiten Lenkkreises, der zur Sicherheit notwendig ist, keine Überbeanspruchung von Teilen aufgrund eines übergroßen Gesamtpotentiales entstehen.

Erfindungsgemäß wird diese Aufgabe durch die im kennzeichnenden Teil von Anspruch 1 genannten Merkmale gelöst.

Das in erfindungsgemäßer Weise angeordnete und gesteuerte Druckbegrenzungsventil kann das Gesamtpotential der Hydraulik in gewünschter Weise reduzieren. Je höher der Druck in einem Lenkkreis ansteigt, um so mehr wird der Druck im anderen Lenkkreis reduziert, wobei die Verhältnisse gleich gehalten werden können, d.h. das Gesamtpotential konstant. Wenn z.B. der Druck in dem zweiten radangetriebenen Lenkkreis ansteigt, wird über die Leitungsverbindung mit dem ersten, motorangetriebenen Lenkkreis der Druck in dem ersten Lenkkreis entsprechend reduziert. Der umgekehrte Fall ist jedoch genauso möglich.

In einer erfindungsgemäßen Ausgestaltung kann das Druckbegrenzungsventil so gesteuert sein, daß das Gesamtpotential der hydraulischen Verstärkung nicht oder wenigstens nicht wesentlich die Größe einer Einkreislenkung übersteigt.

Eine Schließhaltefeder kann in dem Druckbegrenzungsventil derart vorgesehen sein, daß diese gegen den Druck des anderen Kreises auf einen Kolben des Druckbegrenzungsventiles dieses in Schließstellung hält bzw. daß der Kolben gegen die Kraft der Schließhaltefeder versucht, das Druckbegrenzungsventil in eine Öffnungsstellung zu schieben.

In Weiterbildung der Erfindung kann vorgesehen sein, daß das Schließglied des Druckbegrenzungsventiles mit einer Schließfeder versehen ist. Durch diese Maßnahme kann in dem Druckbegrenzungsventil eine kleine Vorspannung (Restkapazität) gehalten werden. Grundsätzlich ist die Schließfeder jedoch nicht unbedingt notwendig.

In einer weiteren Ausgestaltung der Erfindung kann vorgesehen sein, daß die wirksamen Druckflächen des Kolbens des Druckbegrenzungsventiles und des Schließgliedes unterschiedlich sind.

Durch die unterschiedlichen Flächenverhältnisse und ggf. auch in Verbindung mit unterschiedlichen Federstärken kann die Wirkungsweise des Druckbegrenzungsventiles in einem weiten Rahmen variiert werden. Gleichzeitig kann durch diese Maßnahme ggf. auch die Schließhaltefeder schwächer ausgebildet werden.

Eine sehr vorteilhafte Ausgestaltung der Erfindung besteht darin, daß der Kolbenraum des Druckbegrenzungsventils, der mit dem anderen Lenkkreis verbunden ist, von dem Druckmittelabströmraum in dem Druckbegrenzungsventil für den Lenkkreis, in den das Druckbegrenzungsventil eingebaut ist, durch eine belüftete Zwischenkammer getrennt ist.

Die Zwischenkammer vermeidet, daß Ölverluste aus einem Kreis in den anderen Kreis übertreten und somit nicht als Leckagen erkennbar werden.

Nachfolgend ist anhand der Zeichnung ein Ausführungsbeispiel der Erfindung prinzipmäßig beschrieben.

Es zeigt:

Fig. 1: ein Hydraulikschema der Zweikreislenkung

Fig. 2: ein Kurvenbild zum Verhältnis Druck zur Handkraft

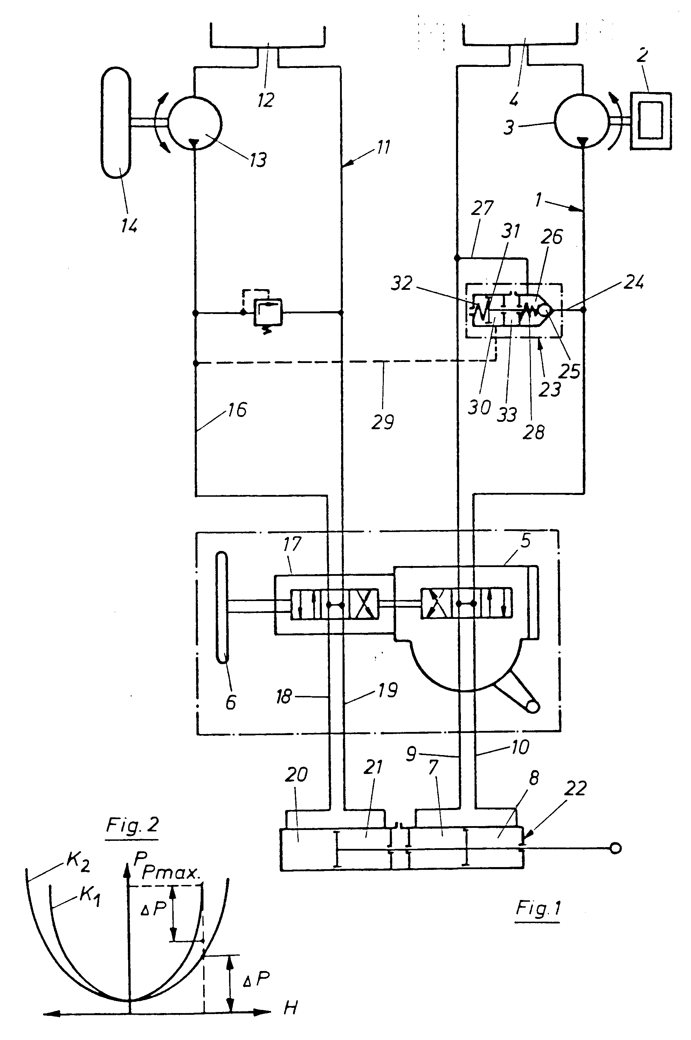

In dem Hydraulikschema nach Fig. 1 ist ein erster Lenkungs kreis 1 dargestellt, der über eine von einem Motor 2 aus angetriebenen Pumpe 3, aus einem Tank 4 mit Druckmittel, im allgemeinen Öl, versorgt wird. In dem Lenkkreis 1 befindet sich ein Lenkventil 5 üblicher Bauart, das in bekannter Weise über ein Lenkhandrad 6 verstellt wird, wodurch einer der beiden Kolbenräume 7 oder 8 einer Servoeinheit 22 in Abhängigkeit von der Verdrehung des Lenkventiles 5 über die Druckzuleitungen 9 bzw. 10 von der Pumpe 3 aus mit Druckmittel versorgt wird.

Ein zweiter Lenkkreis 11 besitzt ebenfalls eine Pumpe 13, die Druckmittel aus einem Tank 12 ansaugt. Die Pumpe 13 wird von einem Rad 14 des Kraftfahrzeuges aus angetrieben. Über eine Druckleitung 16 wird ein zweites Lenkventil 17 mit Druckmittel versorgt, das in Abhängigkeit von seiner Stellung ebenfalls über Druckzuleitungen 18 und 19 entsprechend einen Druckraum 20 bzw. 21 der Servoeinheit 22 mit Druckmittel zur Verstärkung versorgt. Das Lenkventil 5 und das Lenkventil 17, die beiden Kolbenräume 7 und 8 und die Kolbenräu me 20 und 21 der Servoeinheit 22 sind voneinander getrennt. Ebenso sind auch die übrigen Leitungen des ersten Lenkkreises 1 und des zweiten Lenkkreises 11 aus Sicherheitsgründen völlig voneinander getrennt.

In den ersten Leitungskreis 1 ist ein Druckbegrenzungsventil 23 über eine Zuleitung 24 eingebaut. Über eine Kugel als Schließglied 25 wird ein Druckmittelabströmraum 26, von dem aus eine Abströmleitung 27 zu dem Tank 4 zurückführt, abgeschlossen. Hierfür sorgt auch eine Schließfeder 28.

Über eine Steuerleitung 29 ist ein Kolbenraum 30 mit einem Kolben 31 mit dem zweiten Lenkkreis 11 verbunden. Der Kolben 31 ist durch eine in Richtung auf den ersten Lenkkreis 1 gerichtete Schließhaltefeder 32 vorgespannt. Zwischen dem Druckmittelabströmraum 26 und dem Kolbenraum 30 ist eine Zwischenkammer 33 angeordnet, durch die ein Übertreten von Druckmittel von einem in den anderen Kreis vermieden wird. Die Zwischenkammer ist belüftet.

Wie weiter aus der Fig. 1 ersichtlich ist, ist die wirksame Druckfläche des Schließgliedes 25 kleiner als die wirksame Druckfläche des Kolbens 31. Im Normalfall wird dieses Flächenverhältnis gleich 1:1 gestaltet.

Ohne das Druckbegrenzungsventil 23 würde sich das hydraulische Potential aus den beiden Lenkungskreisen 1 und 11 addieren. Das Druckbegrenzungsventil 23 hingegen führt zu einer Beschränkung, wobei es auf folgende Weise funktioniert:
Solange in dem zweiten Lenkungskreis 11 kein Druck herrscht, ist das Schließglied 25 des Druckbegrenzungsventiles geschlossen. Die Schließfeder 28 ist im Vergleich zu der Schließhaltefeder 32 wesentlich kleiner (z.B. 20 bar). Die Schließhaltefeder kann auf einen Druck von 150 bar vorgespannt sein, der z.B. dem Maximaldruck in dem Lenkungskreis 1 entsprechen kann. Wird nun während der Fahrt des Kraftfahrzeuges in dem zweiten Lenkungskreis 11 über den Radantrieb ein Druck aufgebaut, so wirkt dieser über die Steuerleitung 29 auch in dem Kolbenraum 30 entgegen der Kraft der Schließhaltefeder 32. Gleichzeitig wirkt über die Zuleitung 24 auf das Schließglied 25 der volle Druck des Lenkungskreises 1. Je nach den herrschenden Flächenverhältnissen findet damit abhängig vom Druck in dem zweiten Lenkungskreis 11 eine Druckabregelung in dem ersten Lenkungskreis 1 über das Druckbegrenzungsventil 23 durch das Öffnen des Schließgliedes 25 statt. Dies bedeutet, man kann das hydraulische Gesamtpotential auf das Potential des Lenkungskreises 1 beschränken, wobei in diesem Falle eine entsprechende Aufteilung des Gesamtpotentiales auf den ersten Lenkungskreis 1 und den zweiten Lenkungskreis 11 erfolgt. Die Anordnung des Druckbegrenzungsventiles in dem Lenkungskreis 1 wurde nur willkürlich vorgenommen. Selbstverständlich kann es auch in dem zweiten Lenkungskreis 11 angeordnet sein, wobei es in diesem Falle über eine Zuleitung durch den Druck aus dem Lenkungskreis 1 gesteuert wird und der Druck im Lenkungskreis 11 abgeregelt wird.

Zweckmäßigerweise wird man die Ventilkennlinien der Lenkungsventile 5 und 17 versetzt ausführen. Hierzu wird auf Fig. 2 verwiesen, wobei auf der Abszisse die Handkraft am Lenkhand und auf der Ordinate der Druck in den Lenkungskreisen aufgetragen ist. Dies bedeutet, der Abregeldruck des Druckbegrenzungsventiles verringert sich proportional zum zunehmenden Druck im zweiten Lenkungskreis 11. Dabei ist die Abregel druckänderung vom Flächenverhältnis der druckbeaufschlagten Flächen des Kolbens 31 und des Schließgliedes 25 im Druckbegrenzungsventil 23 abhängig. Das Druckbegrenzungsventil 23 kann mit oder ohne die Schließfeder ausgeführt werden. Die Federkraft der Schließfeder 28 bestimmt den Mindestabregeldruck des Druckbegrenzungsventiles.

Wie aus der Fig. 2 ersichtlich ist, ist der Druckanstieg des zweiten Lenkungskreises 11 (K2) im Vergleich zu dem des ersten Lenkungskreises 1 (K1) bezogen auf die Handkraft am Lenkrad langsamer. Bei einer bestimmten Handkraft H, bei der in dem zweiten Lenkungskreis 11 ein Druck von $\Delta p$ herrscht, erfolgt eine Reduzierung um den gleichen Betrag $\Delta p$ von der Kennlinie des ersten Lenkungskreises 1 vom Maximaldruck p max, wenn das Flächenverhältnis der druckbeaufschlagten Flächen von Kolben 31 und des Schließgliedes 25 gleich 1:1 ist.

**Patentansprüche**

1.  Hilfskraftlenkung für Kraftfahrzeuge mit zwei hydraulisch voneinander getrennten Lenkkreisen (1,11) mit jeweils dazugehörigen Steuereinrichtungen, welche durch die Drehbewegung eines Lenkhandrades ausgelenkt werden, wobei der erste Lenkkreis (1) durch eine von einem Motor angetriebenen Pumpe (3) und der zweite Lenkkreis (11) durch eine radangetriebene Pumpe (13) versorgt wird, und mit einer Servoeinheit (22), die zwei getrennte Arbeitskolben aufweist,
**dadurch gekennzeichnet,** daß
in einem der beiden Lenkkreise (1,11) ein Druckbegrenzungsventil (23) angeordnet ist, das von dem Druck des anderen Kreises (11), derart gesteuert ist, daß das Gesamtpotential der hydraulischen Verstärkung beschränkt wird.

2. Hilfskraftlenkung nach Anspruch 1,
**dadurch gekennzeichnet,** daß
das Druckbegrenzungsventil (23) so gesteuert ist, daß das Gesamtpotential der hydraulischen Verstärkung die Größe einer Einkreislenkung nicht oder wenigstens nicht wesentlich übersteigt.

3. Hilfskraftlenkung nach Anspruch 1 oder 2,
**dadurch gekennzeichnet,** daß
das Druckbegrenzungsventil (23) mit einem Kolben (31) versehen ist, der durch den Druck des anderen Kreises (11) gegen die Kraft einer Schließhaltefeder (32) in Öffnungsstellung des Druckbegrenzungsventiles (23) schiebbar ist.

4. Hilfskraftlenkung nach einem der Ansprüche 1 - 3,
**dadurch gekennzeichnet,** daß
das Schließglied (25) des Druckbegrenzungsventiles (23) mit einer Schließfeder (28) versehen ist.

5. Hilfskraftlenkung nach Anspruch 3 und 4,
**dadurch gekennzeichnet,** daß
die wirksamen Druckflächen des Kolbens (31) und des Schließgliedes (25) unterschiedlich sind.

6. Hilfskraftlenkung nach einem der Ansprüche 1 - 5,
**dadurch gekennzeichnet,** daß
der Kolbenraum (30) des Druckbegrenzungsventils (23), der mit dem anderen Lenkkreis (11) verbunden ist, von dem Druckmittelabströmraum (26) in dem Druckbegrenzungsventil (23) für den Lenkkreis (1), in den das Druckbegrenzungsventil eingebaut ist, durch eine belüftete Zwischenkammer (33) getrennt ist.

**Claims**

1. Power-assisted steering system for motor vehicles having two hydraulically independent steering circuits (1, 11) each with an associated control device which is deflected by the rotational movement of a steering handwheel, with the first circuit (1) being supplied by a motor-driven pump (3) and the second steering circuit (11) being supplied by a wheel-driven pump (13), and having a servo unit (22) with two separate working pistons,
characterized in that
there is disposed in one of the two steering circuits (1, 11) a pressure relief valve (23) which is controlled by the pressure of the other circuit (11) in such a way that the total potential of the hydraulic boost is limited.

2. Power-assisted steering system according to claim 1,
characterized in that
the pressure relief valve (23) is controlled in such a way that the total potential of the hydraulic boost does not, or at least does not substantially exceed the value of a single-circuit steering system.

3. Power-assisted steering system according to claim 1 or 2,
characterized in that
the pressure relief valve (23) is provided with a piston (31) which is slidable by means of the pressure of the other circuit (11) against the action of a hold-closed spring (32) into the open position of the pressure relief valve (23).

4. Power-assisted steering system according to one of claims 1 to 3,
characterized in that
the closing element (25) of the pressure relief valve (23) is provided with a closing spring (28).

5. Power-assisted steering system according to claims 3 and 4,
characterized in that
the effective thrust faces of the piston (31) and of the closing element (25) differ from one another.

6. Power-assisted steering system according to one of claims 1 to 5,
characterized in that
the piston chamber (30) of the pressure relief valve (23) which is connected to the other steering circuit (11) is separated by a ventilated intermediate chamber (33) from the pressure medium discharge chamber (26) in the pressure relief valve (23) for the circuit (1) into which the pressure relief valve is incorporated.

**Revendications**

1. Direction assistée pour véhicules automobiles, comportant deux circuits hydrauliques de direction séparés (1, 11) et leurs dispositifs de commande respectifs qui sont actionnés par rotation d'un volant manuel, le premier circuit (1) étant alimenté par une pompe (3) entraînée par un moteur et le second circuit (11) étant alimenté par une pompe (13) entraînée par une roue, et comportant une unité d'assistance (22) pourvue de deux pistons de travail séparés, **caractérisée** en ce qu'un des deux circuits de direction (1, 11) comporte une soupape de limitation de pression (23) qui est pilotée par la pression de l'autre circuit (11) de telle manière que le potentiel total de l'assistance hydraulique est limité.

2. Direction assistée selon la revendication 1, **caractérisée** en ce que la soupape de limitation de pression (23) est pilotée de telle manière que le potentiel total de l'assistance hydraulique ne dépasse pas, ou au moins pas sensiblement celui d'une direction à circuit unique.

3. Direction assistée selon la revendication 1 ou 2, **caractérisée** en ce que la soupape de limitation de pression (23) est pourvue d'un piston (31) qui peut être déplacé par la pression de l'autre circuit (11) à l'encontre de la force d'un ressort de retenue (32), jusqu'à une position d'ouverture de la soupape (23).

4. Direction assistée selon l'une des revendications 1 à 3, **caractérisée** en ce que l'organe de fermeture (25) de la soupape de limitation de pression (23) est pourvu d'un ressort de fermeture (28).

5. Direction assistée selon les revendications 3 et 4, **caractérisée** en ce que les surfaces efficaces de pression du piston (31) et de l'organe de fermeture (25) sont différentes.

6. Direction assistée selon l'une des revendications 1 à 5, **caractérisée** en ce que la chambre à piston (30) de la soupape de limitation de pression (23) qui est raccordée à l'autre circuit (11) est séparée de la chambre (26) prévue dans la soupape (23) pour l'évacuation du fluide du circuit (1) dans lequel est montée la soupape, au moyen d'une chambre intermédiaire (33) mise à l'air.

Fig.2

Fig.1